# EUROPEAN PATENT SPECIFICATION

(11) **EP 1 338 806 B1**
(45) Date of publication and mention of the grant of the patent: **10.05.2006**
(21) Application number: 01974835.9
(22) Date of filing: 12.10.2001
(51) Int. Cl.: F16B 37/00

(54) **FACILITATED TIGHTENING DEVICE**
VORRICHTUNG ZUM LEICHTEREN FESTZIEHEN
DISPOSITIF DE SERRAGE A EFFET FACILITE

(30) Priority: 02.11.2000 JP 2000336556
(43) Date of publication of application: 27.08.2003
(73) Proprietor: NHK SPRING CO., LTD., Yokohama-shi, Kanagawa 236-0004 (JP)
(72) Inventor: KITAMURA, Yoshiharu, NHK SPRING CO., LTD, Komagane-shi, Nagano 399-4117 (JP); OGINO, Takashi, NHK SPRING CO., LTD, Komagane-shi, Nagano 399-4117 (JP); HEMMI, Yoshihiro, NHK SPRING CO., LTD, Komagane-shi, Nagano 399-4117 (JP)
(74) Representative: Schäfer, Matthias W.
(86) International application number: PCT/JP2001/009006
(87) International publication number: WO 2002/036971

(56) References cited:
- WO-A1-87/06664
- JP-A- 2000 502 434
- JP-U- 1 128 013
- US-A- 3 151 652
- US-A- 3 695 139
- US-A- 4 083 393
- US-A- 5 324 150
- US-A- 5 427 488

## Description

### Background of the Invention

### Field of the Invention

The present invention relates to a simple fastening device that can be used in various machines, such as construction, electrical, or mechanical equipment, and that can be inserted and clamped by a one-touch operation.

### Background of the Invention

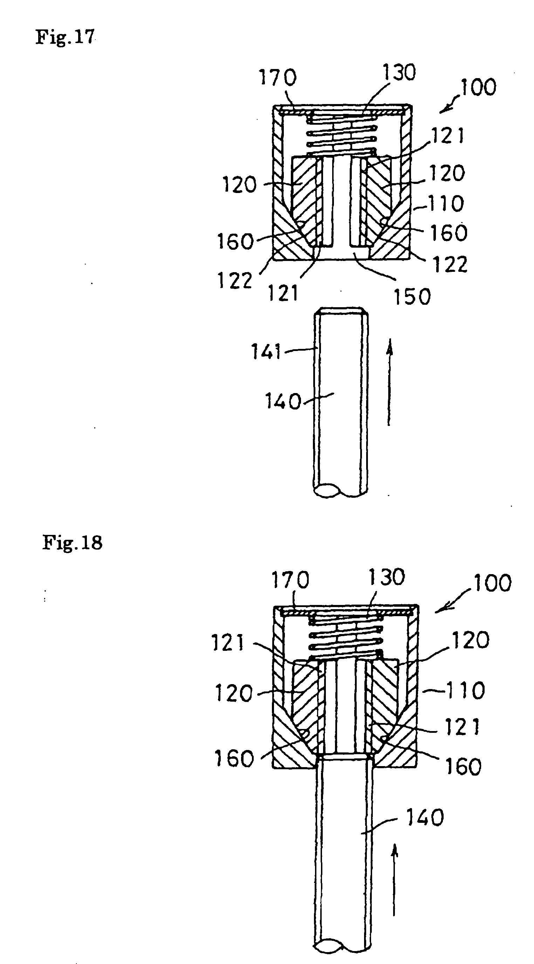

Conventionally, there is a simple fastening device that can be inserted and clamped by a one-touch operation; this is described in Japanese Examined Utility Model Publication No. S55-48171. Figures 17-19 illustrate this conventional simple fastening device 100, which comprises a base 110, running screws 120, 120, and a spring 130 consisting of a coil spring.

A bolt 140 is inserted into the base 110, and a bolt-insertion hole 150 is opened in the base 110 The bolt-insertion hole 150 that is formed in the base 110 has slope portions 160, 160. The diameter of the lower parts of the slope portions 160, 160 of the bolt-insertion hole 150 is made smaller than the diameter of the upper part of the slope portions 160, 160 of the bolt-insertion hole 150, and the running screws 120, 120 are supported on the slope portions 160, 160, respectively.

The running screws 120, 120 are opposed to each other in a pair, and female screws 121, 121 that are to be engaged with a male screw 141 of the bolt 140 are formed in a longitudinal direction on the opposed faces of the running screws 120, 120. In addition, tapered faces 122, 122 that can freely slide on the above-mentioned slope portions 160, 160 are formed at the bottom of the running screws 120, 120.

A spring 130 is inserted into the base 110 in a manner so as to pressurize a pair of the opposed running screws 120, 120 from above. In order that the spring 130 can pressurize the running screws 120, 120, a cover 170 is fixed on the top end of the base 110 by pressure fitting.

In such a structure, by mounting the cover 170 onto the base 110 with the spring 130 flexed to some degree, the running screws 120, 120 are pressed to move toward the bolt-insertion hole 150. As shown in Figure 18, the bolt 140 is inserted in the base 110 from the bolt-insertion hole 150, so that the running screws 120, 120 slide upward on the slope portions 160, 160 against the spring force of the spring 130, and thus the bolt can be inserted between the running screws 120, 120. Then, the female screws 121, 121 of the running screws 120, 120 engage with the bolt 140 due to the spring force of the spring 130, and thus the bolt 140 can be fastened by a one-touch operation.

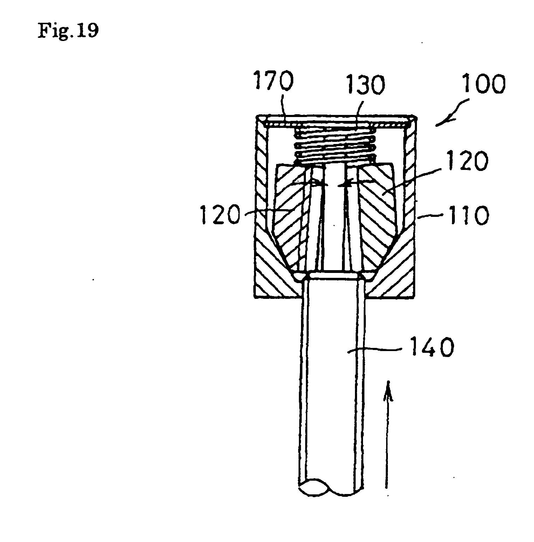

However, this conventional simple fastening device 100 has a shortcoming that the insertion of the bolt 140 can cause the running screws 120, 120 to become inclined or to slip down in the base 110. Figure 19 shows such a situation where the running screws 120, 120 slip down. When the inserted bolt 140 pushes up the running screws 120, 120, the top portions of the running screws 120, 120 are inclined in a manner so as to approach or lean toward each other (as shown by the arrows), or to slip down. Such a displacement causes the bolt 140 to be hooked by the running screws 120, 120 when the bolt 140 is inserted, which makes one-touch fastening of the bolt 140 difficult.

US 4083393 discloses a structure such that a guide pin is mounted onto nut segments through a guide hole of a casing from the rear side of the casing. Therefore, it is necessary that the guide hole be formed in the casing, which results in troublesome processing. Further, it is necessary not only that the pin be aligned with the guide hole, but also that the guide pin be aligned with the pin holes of the nut segments, which results in troublesome assembly.

The present invention has been made in consideration of the above problems with a conventional simple fastening device, and one object of the present invention is to provide a simple fastening device that makes it possible to smoothly insert a bolt while preventing the inclination or slipping down of the running screws at the time that the bolt is inserted, and thereby makes it possible to perform fastening by a one-touch operation.

### Summary of the Invention

This object has been solved by a fastening device according to claim 1. Advantageous embodiments are presented in the dependend claims.

For the aforementioned purpose, the invention set forth in Claim 1 is a simple fastening device wherein movable nut portions are supported by slope portions formed on the sides of a bolt-insertion hole of a base, and a bolt is inserted in the bolt-insertion hole while the movable nut portions are pressed by a pressing member, so that the movable nut portions are engaged with the bolt. The invention set forth in Claim 1 is also characterized such that a guide means is engaged with said movable nut portions to prevent the movable nut portions from slipping down in the base.

Under such a structure, by inserting the bolt into the bolt-insertion hole, the movable nut portion are engaged and fastened with the bolt. According to the present invention, a guide means is engaged with the movable nut portions, as a result of which the movable nut portions will not become inclined or slip down, so that the bolt can be smoothly inserted without being hooked by the movable nut portions.

The invention also comprises (1) a base, to which are formed (a) a bolt-insertion hole, whose one portion is a bolt-receiving face, and (b) on or more slope portions, whose diameters are gradually reduced toward the bolt-insertion side under a condition that they connect with the bolt-insertion hole, (2) one or several movable nut portions, which slide along said slope portion and are engaged with the bolt as the bolt to be inserted moves in an axial direction, (3) pressing members for pressing the one or several movable nut portions downward toward the bolt insertion face and (4) a guide means that engages with the one or several movable nut portions and prevents the movable nut portions from slipping down in the base. The guide means is provided on the nut portion and on a cover attached to the base opposite the bolt insertion face.

Under such a structure, when the bolt is inserted into the bolt-insertion hole, the one or several movable nut portions slide along the slope portion, so that the bolt can be introduced between the movable nut portions and the bolt-receiving face. The movable nut portions engage with the introduced bolt due to the pressure of the pressing member. A reaction force that is generated at this time is received by the bolt-receiving face, and therefore the bolt can be securely fastened.

According to the invention, a guide means is engaged with the movable nut portion, as a result of which the movable nut portion will not become inclined or slip down, so that the bolt can be smoothly inserted without being hooked by the movable nut portion.

Further, the fastening device is characterized in that said guide means comprises (1) a guide projection that is provided on the cover so as to project toward the bolt-insertion face, and (2) a guide groove that is formed on said movable nut portion so as to engage with the guide projection.

Under such a structure, the guide projection is engaged with the guide groove of the movable nut portion, which slides due to insertion of the bolt, so that the movable nut portions can be prevented from being inclined or slipping down. According to this invention, a guide means can be formed easily because of a simple structure that comprises the guide groove and the guide projection.

Another preferred embodiment is characterized such that a cover, into which said bolt can be inserted, is attached on the base in its downstream side of the bolt-insertion direction, and said guide projection is provided on the cover.

According to this invention, since the guide projection is formed on a cover that is separate from the base, the guide projection can be formed easily.

Another preferred embodiment is characterized such that said guide projection has a guide face, which is inclined in the same direction as a sliding direction of said movable nut portion, and that the guide face is engageable with said guide groove.

Thus, because the guide face is formed in a manner so as to become inclined along the sliding direction of the movable nut portion, the movable nut portion can be surely prevented from being inclined or slipping down at the time of sliding.

### Brief Description of the Drawings

Figure 1 illustrates Embodiment 1 of the present invention, a plan view of which is shown by (a), a vertical cross-sectional view of which is shown by (b), and a bottom view of which is shown by (c).
Figure 2(a) is a plan view of a base of the present invention, and Figure 2(b) is a vertical cross-sectional view thereof.
Figure 3(a) is a front view of movable nut portions, Figure 3(b) is a plan view thereof, Figure 3(c) is a vertical cross-sectional view thereof, and Figure 3(d) is a bottom view thereof.
Figure 4(a) is a vertical cross-sectional view of a cover, and Figure 4(b) is a plan view thereof.
Figure 5 is a cross-sectional view showing the condition before a bolt is inserted in Embodiment 1.
Figure 6 is a cross-sectional view showing a condition when a bolt is about to be inserted in Embodiment 1.
Figure 7 is a cross-sectional view showing the condition when a bolt is being inserted in Embodiment 1.
Figure 8 is a cross-sectional view showing the condition after a bolt has been inserted in Embodiment 1.
Figure 9 is a cross-sectional view showing the condition that the bolt is being pulled out of Embodiment 1.
Figure 10 illustrates Embodiment 2 of the present invention, a plan view of which is shown by (a), a vertical cross-sectional view of which is shown by (b), and a bottom view of which is shown by (c).
Figure 11(a) is a vertical cross-sectional view of a cover in Embodiment 2, and Figure 11(b) is a plan view thereof.
Figure 12 is a cross-sectional view showing the condition before a bolt is inserted in Embodiment 3.
Figure 13 is a cross-sectional view showing the condition when a bolt is about to be inserted in Embodiment 3.
Figure 14 is a cross-sectional view showing the condition when a bolt is being inserted in Embodiment 3.
Figure 15 is a cross-sectional view showing the condition after the bolt has been inserted in Embodiment 3.
Figure 16 is a cross-sectional view showing the condition when the bolt is being pulled out of Embodiment 3.
Figure 17 is a cross-sectional view showing a conventional simple fastening device.
Figure 18 is a cross-sectional view showing the condition when a bolt is about to be inserted into the conventional simple fastening device.
Figure 19 is a cross-sectional view showing downward of the movable nut portions in conventional simple fastening device.

### Description of the Preferred Embodiments

Embodiments illustrating the present invention will be described in detail as follows. In each embodiment, the same reference number is used to refer to a given part that is found in one or more of the embodiments.

### (Embodiment 1)

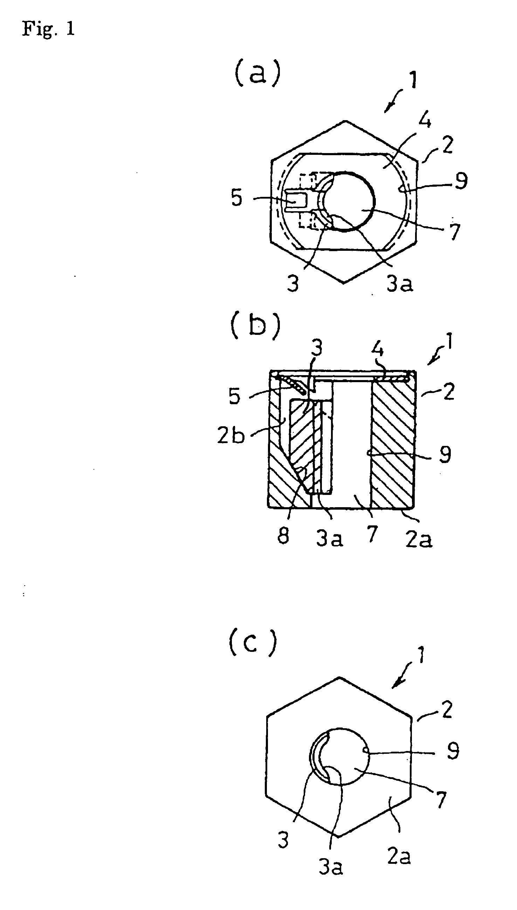

Figures 1-9 illustrate Embodiment I of the present invention and, as shown by Figure 1, a simple fastening device 1 comprises a base 2, a movable nut portion 3, a cover 4, and a spring piece 5.

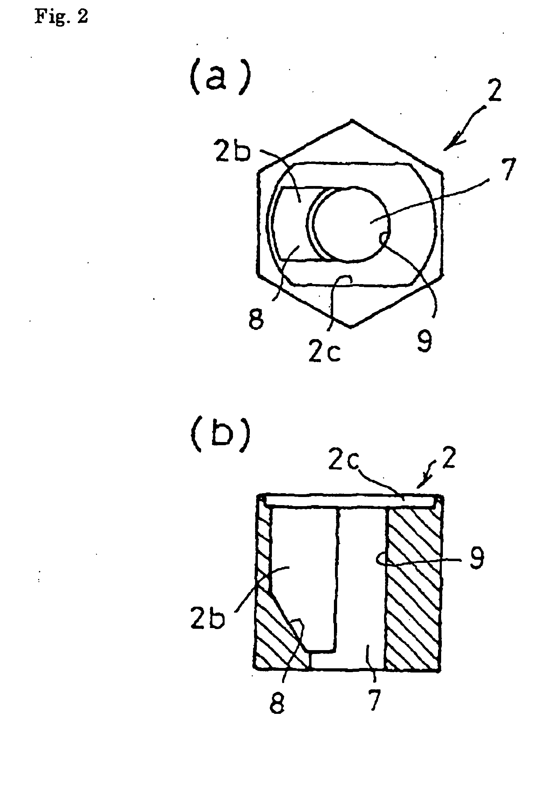

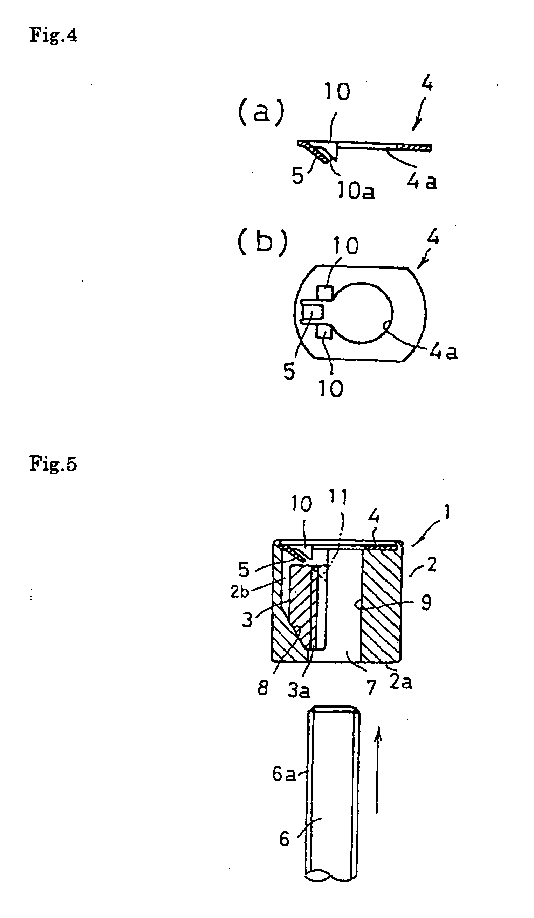

A bolt 6 (Figures 5-9) is inserted into the base 2, and a bolt-insertion hole 7 penetrates through the base in an axial direction as shown by Figure 2. A bolt-insertion face, into which the bolt 6 is inserted, is illustrated as 2a in Figure 1. A moving groove 2b is formed inside the base 2. The moving groove 2b is designed in such a manner that a below-described movable nut portion 3 moves therein, and the moving groove 2b is formed in such a way that the diameter of the bolt-insertion hole 7 varies in a prescribed way. A slope portion 8 is formed on the side of the bolt-insertion face 2a of the moving groove 2b.

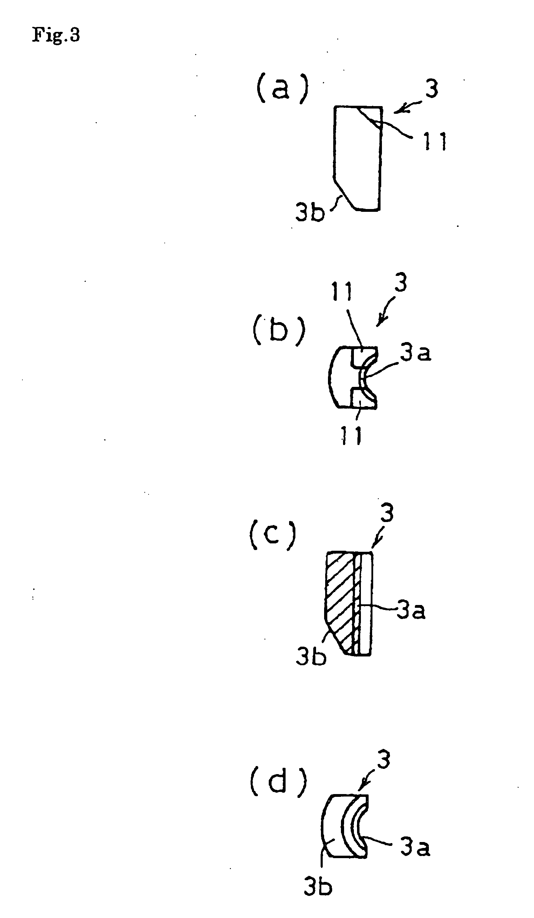

The slope portion 8 is formed into a conical shape whose diameter is gradually reduced toward the bolt-insertion face 2a, in a manner so as to match the bolt-insertion hole 7. The slope portion 8 supports the movable nut portion 3 in such a way that the movable nut portion 3 can slide, and the slope portion 8 is formed into a shape that fits along the outer profile of the movable nut portion 3. Accordingly, when the movable nut portion 3 moves along the slope portion 8, a female screw 3a (which will be described later and which is shown in Figures 1 (a), (b), and (c) and in Figures 3 (b), (c), and (d)) of the movable nut portion 3 that engages with the outer surface of the bolt 6 moves in a horizontal direction.

In this embodiment, the inner face of the bolt-insertion hole 7, which is opposed to the moving groove 2b (the movable nut portion 3), is an arc-shaped bolt-receiving face 9 having approximately the same curvature as that of the bolt 6. The bolt-receiving face 9 receives the reaction force generated when the movable nut portion 3 is engaged with the bolt 6, thereby securely fastening the bolt 6.

A cover-attaching concavity 2c is formed on the end face of the base 2 on the opposite side of the bolt-insertion face 2a. The cover-attaching concavity 2c is formed in a noncircular shape and, in this embodiment, it is formed into a noncircular shape with parallel cuts on two sides. Furthermore, the base 2 in this embodiment is molded so as to have a hexagonal nut-like outer profile, but it is not limited to this shape, and it can also be formed into other shapes.

As shown in Figure 3, the movable nut portion 3 has a split shape that is obtained by splitting a circular column shape into plural pieces along the direction of its diameter. On the surface that is opposed to the bolt-receiving face 9 of the bolt-insertion hole 7, there is formed a female screw 3a that engages with a male screw 6a on the outer surface of the bolt 6. Also, a slide face 3b, which is formed into a conical tapered shape and which slides on the slope portion 8, is formed at the bottom of the movable nut portion 3. In this embodiment, one movable nut portion 3 is used, and it is inserted in the base 2 in a manner so that the female screw 3a of the movable nut portion 3 is opposed to the bolt-receiving face 9, in order to fasten the bolt 6 between the movable nut portion 3 and the bolt-receiving face 9.

The cover 4 is fit into the cover-attaching concavity 2c of the base 2 so as to close the face that is opposite to the bolt-insertion face 2a of the base 2. The cover 4, as shown in Figure 4, is formed into a noncircular outer profile that is similar to that of the cover-attaching concavity 2c, and an insertion hole 4a, through which the bolt 6 penetrates, is formed at the center of the cover 4. After the cover 4 is fit into the cover-attaching concavity 2c of the base 2, the cover 4 clamps the end face of the base 2 and is thereby affixed to the base 2. A spring piece 5 and a guide projection 10 that constitutes a guide means are formed on such a cover 4.

One part of the cover 4 is bent toward the side of the base 2, so that elasticity is given to the spring piece 5. The spring piece 5 acts as a pressing means for pressing the movable nut portion 3, which is inserted in the base 2, downward. Thus, the spring piece 5 is integrated with the cover 4, and the number of parts that constitute a simple fastening device is reduced, resulting in easy assembly, which is advantageous.

The guide projection 10 is formed on the cover 4 on the side of the spring piece 5. In this embodiment, the guide projection 10 is formed in a manner so as to project toward the base 2 (the insertion side of the bolt 6) from both sides of the spring piece 5. In this way, the guide projection 10 is formed into a triangular piece that protrudes downward, and it has a guide face 10a that is inclined in the same direction as the slope portion 8 of the above-mentioned base 2.

Guide grooves 11 constituting a guide means, together with the guide projections 10, are formed on the movable nut portion 3. As shown in Figure 3, the guide grooves 11 are provided on both sides of the top face of the movable nut portion 3 and are engaged with the guide projections 10. This engagement of the guide projections 10 and the guide grooves 11 prevent the movable nut portion 3 from slipping down.

Figures 5-9 illustrate the action of this embodiment. As shown in Figure 5, movable nut portion 3 is inserted into the moving groove 2b of the base 2 in a manner so that a female screw 3a is opposed to the bolt-receiving face 9 of the bolt-insertion hole 7. In addition, under a free condition that the bolt is not fastened, the movable nut portion 3 is supported by the slope portion 8. Under such a supported condition both ends of the movable nut portion 3, which are perpendicular to the axial direction of the movable nut portion 3, are brought into contact with and fastened to the inner face of the base 2, and thus the movable nut portion 3 is prevented from falling out of the base 2. In addition, both ends of the movable nut portion 3, which are perpendicular to the axial direction of the movable nut portion 3, protrude inside the bolt-insertion hole 7 (see Figure 1).

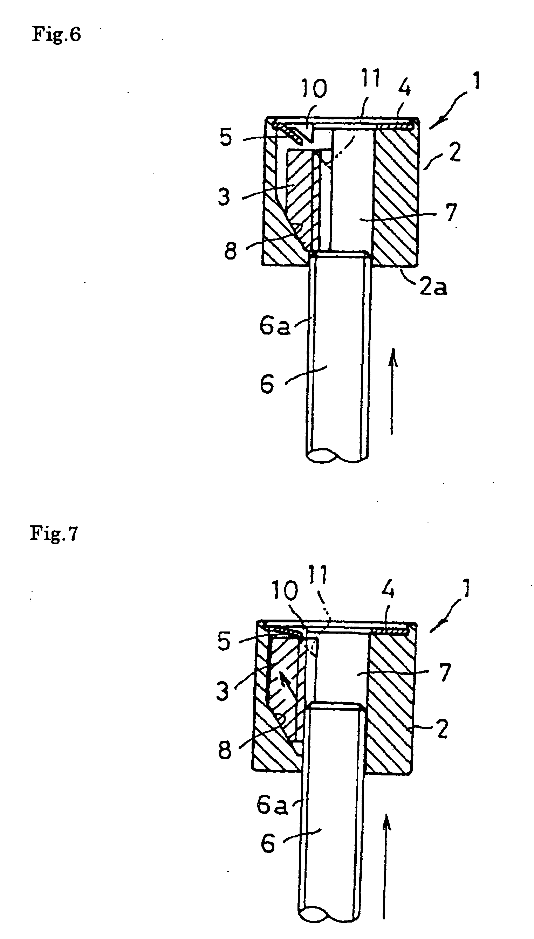

The bolt 6 is formed in an upright fashion from an unfastened member (not shown), and when the simple fastening device 1 is made to approach the bolt 6, the bolt 6 is inserted into the bolt-insertion hole 7 of the base 2 from the side of the bolt-insertion face 2a. As shown in Figure 6, due to this insertion, the bolt 6 pushes up the movable nut portion 3. As shown in Figure 7, due to this pushing up, the movable nut portion 3 slides upwards along the slope portion 8, and the movable nut portion 3 moves upward.

As a result of this movement upward, the guide projections 10 of the cover 4 are engaged with the guide grooves 11 of the movable nut portion 3. The guide face 10a of the guide projection 10 slides in the guide groove 1 so as to achieve such an engagement. The guide face 10a is inclined in the same direction as the slope portion 8 of the base 2, so that the guide projection 10 prevents the movable nut portion 3 from displacement, namely from slipping down or being inclined, toward the bolt-insertion hole 7. As a result, the bolt 6 is smoothly inserted in the base 2 without being hooked by the movable nut portion 3. In this embodiment, the guide grooves 11 are formed on both sides of the movable nut portion 3, and engaged with the guide projections 10, respectively, so that the movable nut portion 3 can be prevented from slipping down or being inclined.

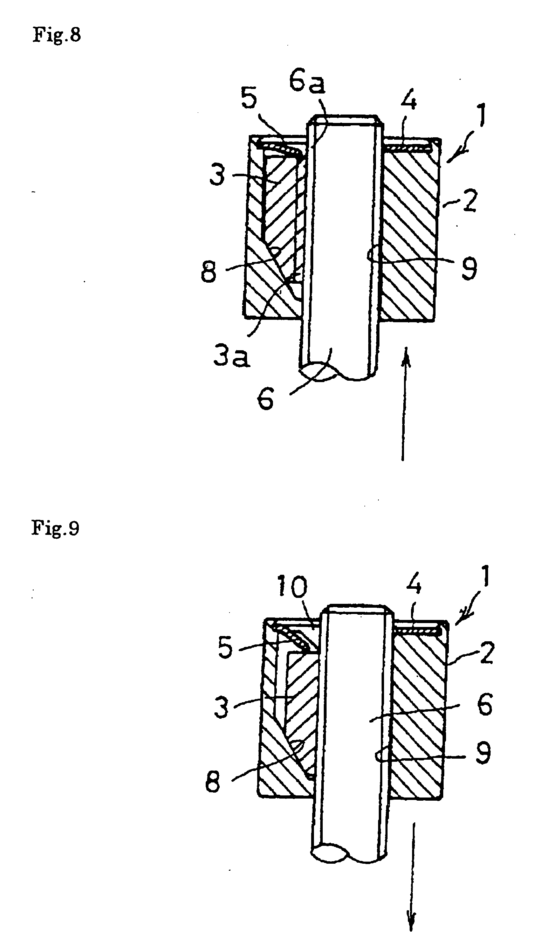

Figure 8 illustrates the condition after the bolt 6 has been inserted into the base 2, in which the spring piece 5 of the cover 4 elastically presses the top end of the movable nut portion 3 and presses the movable nut portion 3 downward. Due to this pressing, the movable nut portion 3 moves downward along the slope portion 8, and the female screw 3a is engaged with the male screw 6a of the bolt 6. Due to this engagement, the bolt 6 is bought into contact with the bolt-receiving face 9 of the bolt-insertion hole 7, and the bolt-receiving face 9 receives the reaction force of the engagement. As a result, the movable nut portion 3 can fasten the bolt 6 without loosening. Figure 9 illustrates the condition when the inserted bolt 6 has been returned slightly downward, and the female screw 3a of the movable nut portion 3 is engaged with the male screw 6a of the bolt 6.

In such an embodiment, the guide projections 10. which constitute a guide means, and the guide grooves 11 are engaged with each other so as to prevent slipping down or inclination of the movable nut portion 3, and thus the bolt 6 can be smoothly inserted without being hooked by the movable nut portion 3. Thereby, fastening can be surely performed by one-touch insertion. Also, in this embodiment, because the spring piece 5 is integrated with the cover 4, the number of parts can be reduced, and the entire axial length of the device can be shortened.

### (Embodiment 2)

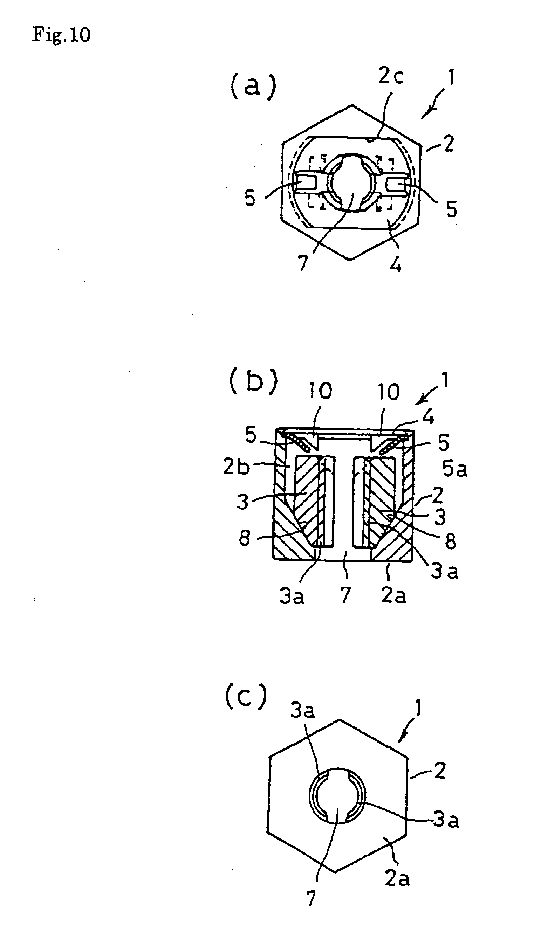

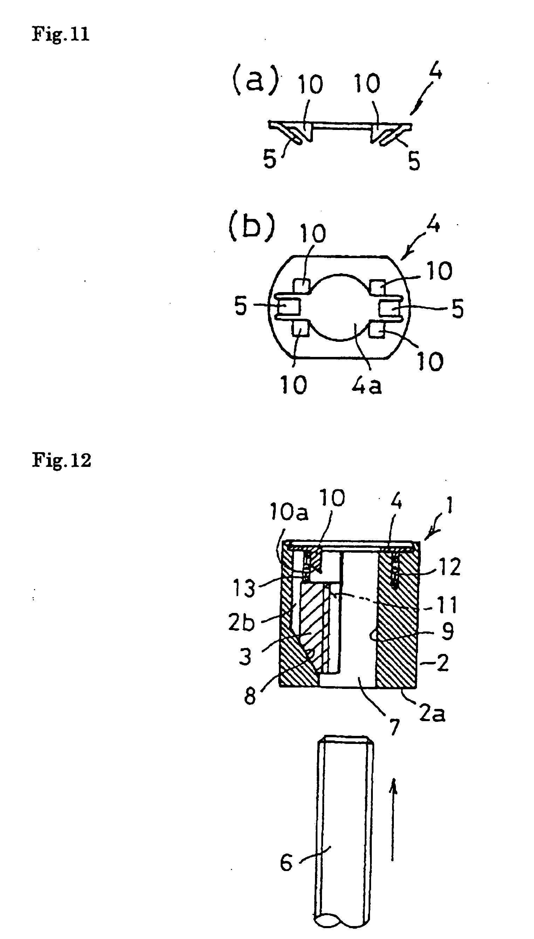

Figures 10 and 11 illustrate Embodiment 2 of the present invention. In this embodiment, as shown in Figure 10, a moving groove 2b, which has a slope portion 8, is formed opposite to both sides of the bolt-insertion hole 7. Furthermore, a pair of movable nut portions 3 are supported by the slope portion 8 in such a way that the movable nut portions 3 face each other. A pair of the movable nut portions 3 are inserted in the base 2 in such a way that the female screws 3a face each other..

Guide grooves 11 are formed on the top faces of the movable nut portions 3 and, as shown in Figure 11, the guide projections 10 to be engaged with the guide grooves 11 are formed on the cover 4 in such a way that the number of the guide protrusions 10 equals the number of movable nut portions 3. Furthermore, the spring pieces 5 for pressing each of the movable nut portions 3 downward are formed at positions of the cover 4 that correspond to the movable nut portions 3.

In this embodiment, when the bolt 6 is inserted in the bolt-insertion hole 7 from the side of the bolt-insertion face 2a, a pair of the movable nut portions 3 move upward along the slope portion 8. Due to this movement, the guide projections 10 are engaged with the guide grooves 11 of the movable nut portions 3. As a result, the movable nut portions 3 can be prevented from inclining or slipping down, and the bolt 6 can be smoothly inserted. After the bolt 6 is inserted, the pair of movable nut portions 3 are pressed by the spring piece 5, and thus the movable nut portions 3 are engaged with the bolt 6 in such a way that the movable nut portions 3 clamp the bolt 6 from both sides of the bolt 6. Thereby, the force for fastening the bolt 6 becomes large, so that the bolt 6 can be stably fastened.

### (Embodiment 3)

Figures 12-16 illustrate Embodiment 3 of the present invention. In this embodiment, a spring-accommodating groove 12 is formed at the end opposite to the bolt-insertion face 2a of the base 2. The spring-accommodating groove 12 is formed so as to have a predetermined length in the axial direction of the base 2, so that a coil spring 13 can be partially inserted therein.

Because the coil spring 13 is inserted into the spring-accommodating groove 12, one part of the coil spring 13 is positioned in the moving groove 2b of the base 2, and thus the coil spring 13 presses the movable nut portions 3, which are inserted in the grooves 2b, downward. Accordingly, in this embodiment, a spring piece 5 is not formed on the cover 4, and therefore the shape of the cover 4 is simple.

Guide projections 10, which are to be engaged with the guide grooves 1 of the movable nut portions 3, are formed on the cover 4. The guide projection 10 projects from the cover 4 in an upright fashion on the bolt-insertion face 2a of the base 2, in the condition that the guide projection 10 has the guide face 10a so as to be engaged with the guide groove 11 of the running screw 3.

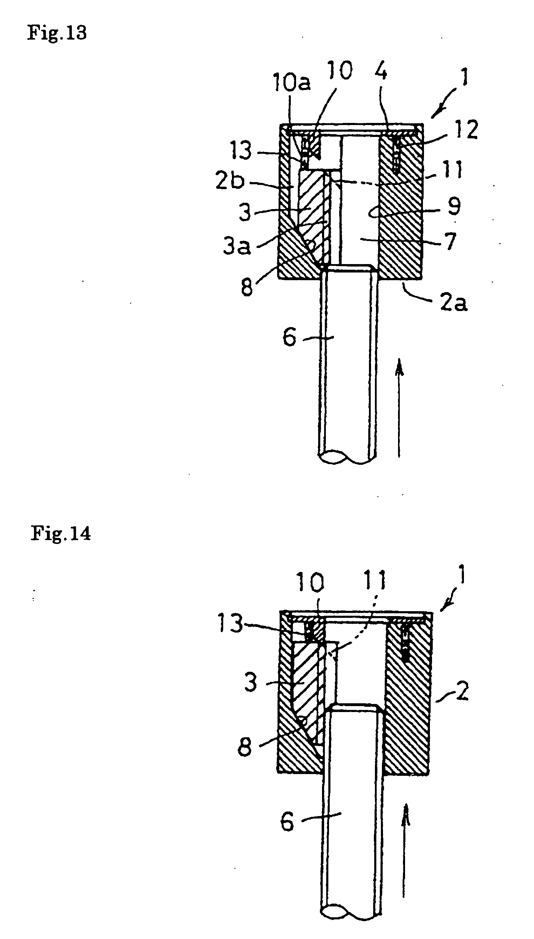

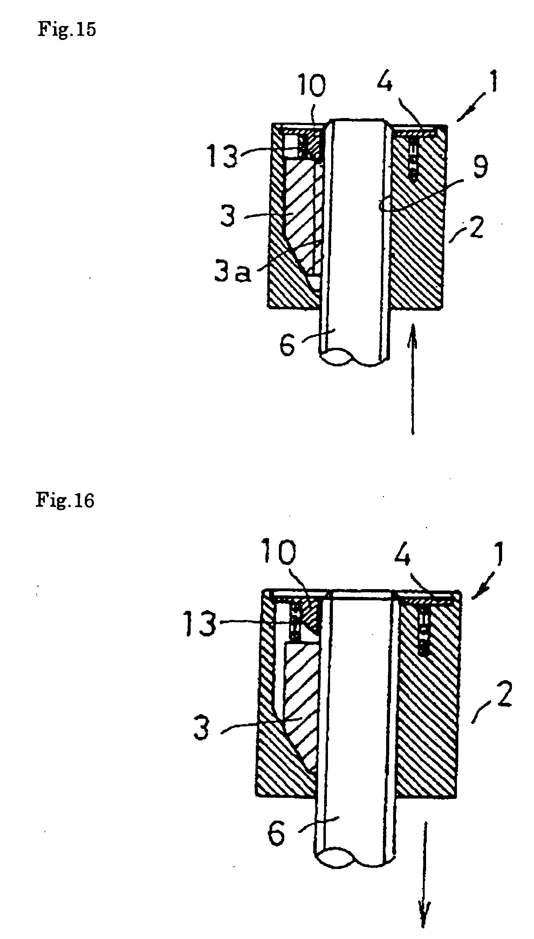

Figures 12 and 13 illustrate the condition before a bolt is inserted into the base 2 in this embodiment, Figure 14 illustrates the condition while a bolt is being inserted, Figure 15 illustrates the condition after a bolt has been inserted, and Figure 16 illustrates the condition when the bolt 6 is returned slightly downward and the female screw 3a of the movable nut portion 3 is engaged with the male screw 6a of the bolt 6. When the bolt 6 is inserted in the base 2, the movable nut portion 3 moves upward along the slope portion 8. Because the guide projection 10 of the cover 4 is engaged with the guide groove 11 of the movable nut portion 3, the movable nut portion 3 can be prevented from inclining or slipping down. Further, because the coil spring 13 presses the movable nut portion 3 downward, the female screw 3a of the movable nut portion 3 can be engaged with the bolt 6. In addition, because the bolt-receiving face 9 of the bolt-insertion hole 7 receives the reaction force from this engagement, the bolt 6 can be securely fastened.

The present invention is not limited to the above embodiments, and it can be implemented in various ways. For example, the cover 4 can be omitted from the base 2. In this case, the movable nut portion 3 can be prevented from inclining or slipping down by forming the guide projection 10 at a portion of the base 2 that faces the movable nut portion 3. Also, when a plurality of movable nut portions 3 are provided, more than one pair can be provided.

The possibility of industrial utilization is self evident.

### Reference Numbers

- 1.: Fastening device
- 2.: Base
- 2a.: Bolt-insertion face
- 2b.: Groove
- 2c.: Cover-attaching concavity
- 3.: Movable nut portion
- 3a.: Female screw
- 3b.: Slide face
- 4.: Cover
- 5.: Spring piece
- 6.: Bolt
- 6a.: Male screw
- 7.: Bolt-insertion hole
- 8.: Slope portion
- 9.: Bolt-receiving face
- 10.: Guide projection
- 10a.: Guide face
- 11.: Guide groove
- 12.: Spring-accommodating groove
- 100.: Simple fastening device
- 110.: Base
- 120.: Running screw
- 121.: Female screw
- 122.: Tapered face
- 130.: Spring
- 140.: Bolt
- 141.: Male screw
- 150.: Bolt-insertion face
- 160.: Slope portion

## Claims

1. A fastening device (1) comprising a base (2) to which are formed a bolt-insertion hole (7), and one or several slope portions (8) whose diameters are gradually reduced toward the bolt-insertion face (2a) while they connect with the bolt-insertion hole (7), one or several movable nut portions (3) that are slidable along the slope portions (8) and are engageable, in use of the fastening device, with a bolt (6) inserted in the bolt-insertion hole (7), and a pressing member (5; 13) for pressing each movable nut portion (3) downward toward the bolt-insertion face (2a), **characterized in that** a cover (4) through which, in use, the bolt (6) is insertable, is attached to the base (2) opposite from the bolt insertion face (2a), and guide means are provided on each movable nut portion (3) and on the cover (4), which guide means each have a slope part that is inclined in the same direction as the inclination of said slope portion (8), and which guide means will engage with each other at said slope parts, upon insertion of the bolt in the fastening device, so as to prevent each and every movable nut portion (3) from being inclined toward the bolt-insertion hole (7).

2. A fastening device (1) according to claim 1, **characterized in that** one portion of the bolt-insertion hole (7) is an arc shaped bolt-receiving face (9) having approximately the same curvature as that of the bolt (6).

3. A fastening device (1), as set forth in any of Claims 1-2, **characterized in that** the guide means comprise a guide projection (10) that is provided on the cover (4) in a manner so as to project toward the bolt-insertion face (2a), and a guide groove (11) that is formed on the movable nut portion (3) so as to engage with the guide projection (10).

4. A fastening device (1), as set forth in any of Claims 1-3, **characterized in that** the pressing member (5) is provided as an integral part on the cover (4).

5. A fastening device (1), as set forth in Claim 3, **characterized in that** the guide projection (10) has a guide face (10a) that is inclined in the same direction as the inclination of the slope portion (8), and such that the guide face (10a) is engageable with said guide groove (11).

6. A fastening device (1), as set forth in Claim 3, **characterized in that** there is formed on said base (2) a groove (2b), into which one or more movable nut portions (3) are slideably insertable, and which supports both of the side faces of an inserted movable nut portion (3).

7. A fastening device (1) as set forth in Claim 3, **characterized in that** the guide projection (10) is provided as integral part of the cover (4).

## Patentansprüche

1. Befestigungsvorrichtung (1) welche eine Basis (2) aufweist, an die eine Bolzen-Einführ-Öffnungen (7) angeformt ist, und eine oder mehrere schräge Abschnitte (8), deren Durchmesser sich graduell in Richtung der Bolzen-Einfiihr-Seite (2a) hin verringern während sie mit mit der Bolzen-Einführ-Öffnung (7) verbinden, ein oder mehrere bewegliche Gewindeabschnitt(e) (3), die entlang der schrägen Abschnitte (8) gleitbar sind, und die bei Benutzung der Befestigungsvorrichtung mit einem Schraubenbolzen (6) in Eingriff bringbar sind, der in die Bolzen-Einführ-Öffnung (7) eingeführt ist, und ein Andrückteil (5; 13) zum nach unten Drücken jedes beweglichen Gewindeabschnitts (3) in Richtung der Bolzen-Einführ-Seite (2a), **dadurch gekennzeichnet, dass** eine Abdeckung (4), durch die der Schraubenbolzen bei Benutzung einführbar ist, an der Basis (2) gegenüber von der Bolzen-Einführ-Seite (2a) befestigt ist, und dass Führungseinrichtungen an jedem beweglichen Gewindeabschnitt (3) und an der Abdeckung (4) vorgesehen sind, wobei die Führungseinrichtungen jeweils einen schrägen Teil aufweisen, der in der gleichen Richtung geneigt ist, wie der schräge Abschnitt (8), und wobei die Führungseinrichtungen miteinander an den schrägen Abschnitten beim Einführen des Schraubenbolzens in die Befestigungsvorrichtung eingreifen, um so zu verhindern, dass jeder bewegliche Gewindeabschnitt (3) sich in Richtung der Bolzen-Einfiihr-Öffnung (7) neigt.

2. Befestigungsvorrichtung (1) nach Patentanspruch 1, **dadurch gekennzeichnet, dass** ein Abschnitt der Bolzen-Einführ-Öffnung (7) eine bogenförmige Bolzen-Aufnahme-Seite (9) mit etwa der gleichen Krümmung wie derjenigen des Schraubenbolzens (6) ist.

3. Befestigungsvorrichtung (1) nach einem der Patentansprüche 1 - 2, **dadurch gekennzeichnet, dass** die Führungseinrichtungen einen Führungsvorsprung (10) aufweisen, der an der Abdeckung (4) derart vorgesehen ist, dass er in Richtung der Bolzen-Einführ-Seite (2a) hervorsteht, und eine Führungsrille (11), die an den beweglichen Gewindeabschnitt (3) geformt ist, um in den Führungsvorsprung (10) einzugreifen.

4. Befestigungsvorrichtung (1) nach Patentanspruch 3, **dadurch gekennzeichnet, dass** das Andrückteil (5) als ein integraler Bestandteil an der Abdeckung vorgesehen ist.

5. Befestigungsvorrichtung (1) nach Patentanspruch 3, **dadurch gekennzeichnet, dass** der Führungsvorsprung (10) eine Führungsseite (10a) aufweist, die in der gleichen Richtung geneigt ist, wie die Neigung des schrägen Abschnitts (8), und dass die Führungsseite (10a) mit der Führungsrille (11) in Eingriff bringbar ist.

6. Befestigungsvorrichtung (1) nach Patentanspruch 3, **dadurch gekennzeichnet, dass** in die Basis (2) eine Rille (2b) geformt ist, in welche ein oder mehrere Gewindeabschnitte (3) gleitbar einführbar sind, und welche beide Seitenteile eines eingeführten bewegbaren Gewindeabschnitts (3) hält.

7. Befestigungsvorrichtung (1) nach Patentanspruch 3, **dadurch gekennzeichnet, dass** der Führungsvorsprung (10) als ein integraler Bestandteil der Abdeckung (4) vorgesehen ist.

## Revendications

1. Dispositif de serrage (1) comprenant une embase (2) dans laquelle sont formés un trou d'introduction de boulon (7) et une ou plusieurs parties en pente (8) dont les diamètres se réduisent progressivement vers la face d'introduction de boulon (2a) tandis qu'elles connectent avec le trou d'introduction de boulon (7), une ou plusieurs parties d'écrou mobiles (3) qui peuvent coulisser le long des parties en pente (8) et peuvent venir en prise, lors de l'utilisation du dispositif de serrage, avec un boulon (6) introduit dans le trou d'introduction de boulon (7), et un élément de pression (5 ; 13) destiné à pousser chaque partie d'écrou mobile (3) vers le bas vers la face d'introduction de boulon (2a), **caractérisé par le fait qu'**un couvercle (4) à travers lequel peut être introduit, en utilisation, le boulon (6) est fixé à l'embase (2) du côté opposé à la face d'introduction de boulon (2a), et qu'il est prévu des moyens de guidage sur chaque partie d'écrou mobile (3) et sur le couvercle (4), lesquels moyens de guidage présentent, chacun, une partie en pente qui est inclinée dans la même direction que l'inclinaison de ladite partie en pente (8), et lesquels moyens de guidage viennent en prise l'un avec l'autre auxdites parties en pente à l'introduction du boulon dans le dispositif de serrage, de manière à éviter que chaque et toute partie d'écrou mobile (3) ne soit inclinée vers le trou d'introduction de boulon (7).

2. Dispositif de serrage (1) selon la revendication 1, **caractérisé par le fait qu'**une partie du trou d'introduction de boulon (7) est une face de réception de boulon en forme d'arc (9) ayant environ la même courbure que celle du boulon (6).

3. Dispositif de serrage (1) selon l'une quelconque des revendications 1 et 2, **caractérisé par le fait que** les moyens de guidage comprennent une saillie de guidage (10) qui est prévue sur le couvercle (4) de manière à faire saillie vers la face d'introduction de boulon (2a) et une rainure de guidage (11) qui est formée sur la partie d'écrou mobile (3) de manière à venir en prise avec la saillie de guidage (10).

4. Dispositif de serrage (1) selon l'une quelconque des revendications 1 à 3, **caractérisé par le fait que** l'élément de pression (5) est prévu comme partie solidaire sur le couvercle (4).

5. Dispositif de serrage (1) selon la revendication 3, **caractérisé par le fait que** la saillie de guidage (10) présente une face de guidage (10a) qui est inclinée dans la même direction que l'inclinaison de la partie en pente (8) et de sorte que la face de guidage (10a) puisse venir en prise avec ladite rainure (11).

6. Dispositif de serrage (1) selon la revendication 3, **caractérisé par le fait qu'**il est formé sur ladite embase (2) une rainure (2b) dans laquelle peuvent être introduites de manière coulissante une ou plusieurs parties d'écrou mobiles (3) et qui supporte les deux faces latérales d'une partie d'écrou mobile (3) introduite.

7. Dispositif de serrage (1) selon la revendication 3, **caractérisé par le fait que** la saillie de guidage (10) est prévue comme partie solidaire du couvercle (4).
